# EUROPEAN PATENT APPLICATION

(11) **EP 4 485 868 A1**
(43) Date of publication of application: **01.01.2025**
(21) Application number: 23182359.2
(22) Date of filing: 29.06.2023
(51) Int. Cl.: H04L 12/40, H04L 67/104

(54) **PROCESS CONTROL SYSTEM**

(71) Applicant: ABB SCHWEIZ AG, 5400 Baden (CH)
(72) Inventor: KEUL, Thomas, 63579 Freigericht (DE); SHI, Huan, Shangcheng District, Hangzhou, 310000 (CN); LIU, Wendy, Qiantang District, Hangzhou, 310000 (CN); HONG, TingTing, Shangcheng District, Hangzhou, 310000 (CN)
(74) Representative: Maiwald GmbH

(57) **Abstract**

A process control system comprising at least one module termination unit, at least one adapter module arranged on the module termination unit and configured to communicate with a field device, and at least one controller module arranged on the module termination unit and configured to process data from the adapter module, wherein the adapter module and the controller module are connected to each other by a peer-to-peer connection, in particular through the module trermination unit.

## Description

### FIELD OF THE INVENTION

The present invention relates to a process control system, in particular for an input/output-system.

### BACKGROUND OF THE INVENTION

Process control systems are generally known in the prior art. Process control systems may comprise several different hardware units. Process control systems may be used to control complex production plants, e.g. in process industry or automobile industry. In practice, a process control system comprises several different field devices, which are connected with the I/O modules on the module termination unit. I/O signals of a process control system are collected and distributed by remote I/O systems typically installed very close to the automation process. These remote I/O-systems are connected to the process control systems via fieldbuses. The conversion of fieldbus signals into for the controller readable/ processable/understandable data objects will be made in a unit which is called fieldbus communication interface (FCI) or sometimes called communication interface (CI).

Control equipment for process automation needs to be available as product and service spare parts for very long time, but the electronic market changes much faster. In case that hardware components must be updated then multiply variants of fieldbus communication interface Hardware for each fieldbus type must be redesigned which leads to a huge maintenance effort.

It has now become apparent, due to the above reasons, that there is a need to provide a further process control system.

These and other objects, which become apparent upon reading the following description, are solved by the subject matter of the independent claims. The dependent claims refer to preferred embodiments of the invention.

### SUMMARY OF THE INVENTION

According to an aspect of the present invention, a process control system is provided comprising: at least one module termination unit; at least one adapter module arranged on the module termination unit and configured to communicate with a field device; and at least one controller module arranged on the module termination unit and configured to process signals from the adapter module; wherein the adapter module and the controller module are connected to each other by a peer-to-peer connection, in particular through the module termination unit.

The module termination unit may also be described as a mounting termination unit. The module termination unit may also be described as a baseplate or a backplane. The module termination unit is configured to hold the adapter module and the control module. Further modules may be arranged at the module termination unit, for example a power module. The module termination unit may comprise electric ciruits for powering the modules and for data transfer between the modules.

The adapter module may contain/comprise, preferably only, the fieldbus specific transceivers and/or hardware-drivers. The adapter module may be connected to an input/output module or I/O module, in particular a remote I/O module.

The adapter module and the control module are connected by a peer-to-peer connection. The peer-to-peer connection is provided through the module termination unit. The peer-to-peer connection may also be described as peer-to-peer adapter channel. The peer-to-peer connection may comprise any possible type of signal. The signal type of the peer-to-peer connection may be an electrical single ended signal, an electrical differential signal, a wireless signal or an optical signal. Signals from an I/O-device go through the adapter module via the peer-to-peer connection to the controller module. The signals may also be described as field device data, since the data which is transferred through the peer-to-peer connection may originate from a field device.

The present invention allows high flexibility when selecting different fieldbus types. When a fieldbus is selected, it may be assigned freely to a controller module. Also, certain signals of the peer-to-peer connection can be used for fast detection of the insertion, the removal or the failure of a new or different adapter module. Furthermore, because of the peer-to-peer connection, no bandwidth limitation caused by the electric architecture may occure anymore, in particular compared to a bus architecture on the module termination unit. To achieve these features, a common generic CPU core may be used for all fieldbus types.

In an embodiment, the control module is connected to multiple adapter modules by peer-to-peer connections. This allows to control multiple field devices simultaneously. In particular multiple devices with same and/or different field bus protocols.

In an embodiment, the adapter module is connected to multiple controller modules by peer-to-peer connection. In that way, different settings may be possible. Also, one controller module may be used as a backup for redundancy reasons.

In an embodiment, at least one controller module of the multiple controller modules is a redundancy controller module. By doing this, possible stand stills may be prevented.

In an embodiment, the peer-to-peer connection comprises multiple peer-to-peer signal channels, in particular two-way channels and/or one-way channels. More precisely, a set of peer-to-peer wirings are combined to the peer-to-peer connection or peer-to-peer adapter channel with several differential and single ended signals. For some connections, several signal must be provided/possible. For example, to control a RS485 transceiver/driver for PROFIBUS DP, three signals are needed: transmit, teceive and direction control. In a different example, to control ABBs modulebus, five signals are needed: transmit, receive, direction control, synchronization clock and synchronization clock enable.

In an embodiment, the adapter module comprises a selector element, the selector element being configured to select one of a plurality of peer-to-peer connections. This means, the selector element is configured to switch between different peer-to-peer connections. The selector element may be a software logic or a hardware element.

In an embodiment, the adapter module comprises a configuration element, the configuration element being configured to control the selector element. The configuration element may be connected to the control module, to control to which peer-to-peer connection the selector element should switch.

In an embodiment, the control module comprises a configuration unit, wherein the configuration unit is configured to communicate with the configuration element of the adapter module. The configuration unit is configured to control the configuration elements of the adapter modules. The configuration unit may also be described as configuration manager. The configuration unit communicates with the configuration elements.

In an embodiment, the selector element of the adapter module comprises a peer-to-peer connection to the selctor element of the control module and the configuration element of the adapter module comprises a service BUS connection to the configuration unit of the control module. More precisely, the configuration element or multiple configuration elements and the configuration unit or multiple configuration units may be connected to each other by a single BUS connection. The single BUS connection may be a service BUS connection and/or a redundant configuration BUS connection. It is also possible, that there may be more than one BUS connection.

The module termination unit preferably comprises multiple peer-to-peer adapter channels. A flexible assignment of adapter modules to control mopdules may be established by the selector elements according to application demands. As mentioned above, the control module and adapter module each use a service BUS connection for setting the selector elements to a desired/chosen peer-to-peer connection.

In an embodiment, the adapter module and the controller module are separate hardware components. This allows to switch out or repair any module separately. Alternatively the adapter module hardware and control module hardware may be placed in the same module housing. Then, the adapter module may be connected directly with the controller module without a connection in the module termination unit.

In an embodiment, the peer-to-peer connection is achieved through a wiring in the module termination unit. More precisely, the wiring is embedded inside and/or on the module termination unit. For example the wiring may be embedded in a plate or the sort of the module termination unit.

In an embodment, the wiring of the peer-to-peer connection in the the module termination unit is a passive wiring. This means, the wiring may be used universally.

In an embodiment, the adapter module comprises transceiver elements for one or multiple fieldbuses. The transceiver elements may be used to transform the signals from the I/O-device such that the signals may be send through the peer-to-peer connection.

In an embodiment the control module comprises a fieldbus communication processor for one or multiple fieldbuses. The fieldbus communication processor may consist of hardware and softeware elements.The fieldbus communication processor may be configured to process the signals received by the peer-to-peer connection. The fieldbus communication processor may comprise a CPU core with Memory and may be used for process automation control. The term CPU core may be understood broadly in the context of the present invention. The term CPU core may comprise all typical characteristics of a modern digital processing system like a CPU, MCU, SoC, FPGA, DSP, and/or Al-Engine.

The fieldbus communication processor may have one ore multiple fieldbus communication processors instances of same or different Fieldbus types.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. The drawings display:
- **Figure 1**: a schematic drawing of an embodiement of the present invention;
- **Figure 2**: a schematic drawing of a peer-to-peer connection;
- **Figure 3**: a schematic drawing of a further embodiment of the present invention;
- **Figure 4**: a schematic drawing of a further embodiment of the present invention;
- **Figure 5**: a schematic drawing of a further embodiment of the present invention; and
- **Figure 6**: a schematic drawing of a further embodiment of the present invention.

### DESCRIPTION OF THE EMBODIMENTS

A modern process control system may comprise many different elements and each embodiment shown in the Figures comprises only those elements that are relevant/necessary for that embodiment.

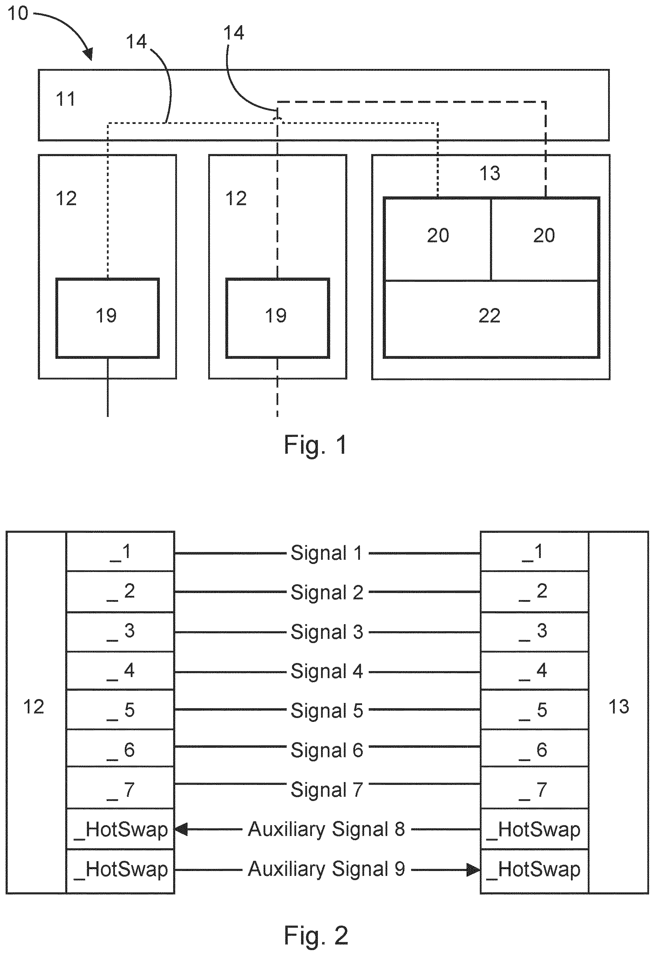

Fig. 1 shows such an embodiment of a process control system 10. The process control system 10 comprises a module termination unit 11, two adapter modules 12 and a controller module 13. The adapter module 12 and the controller module 13 are arranged on the module termination unit 11. Generally, the process control system 10 may comprise multiple module termination untis 11 with multiple adapter modules 12 and multiple controller modules 13.

The adapter modules 12 comprise transceiver elements 19. The transceiver elements 19 may comprise fieldbus specific transceivers and/or hardware-driver. This may also be described as first hardware layer hardware.

The controller module 13 comprises two fieldbus communication processors 20. The fieldbus communication processors 20 in the controller module 13 preferably handle all specifics of a fieldbus protocol. The controller module 13 further comprises an execution element 22 or process automation execution engine. The fieldbus communication processor 20 may be used for the execution element 22 and for one ore multiply instances of same or different fieldbus types. The term exection element may be understood broadly. The execution element 22 may also be used to collect and distribute fieldbus/process data to other components of process control system 10 (Connectivity element).

The controller module 13 is connected to the adapter module 12 by separate peer-to-peer connections 14. More precisely the two fieldbus communication processors 20 are each connected to the transceiver elements 19 of the adapter modules 12 by a peer-to-peer connection 14. The peer-to-peer connections 14 are preferably arranged at least partially in the module termination unit 11.

The peer-to-peer connections 14 may also be described as peer-to-peer adapter channel. The peer-to-peer connections 14 may not be limited to one signal. Rather a set of signals are combined in one peer-to-peer connection 14.

Fig. 2 shows such a a peer-to-peer connection 14 or peer-to-peer adapter channel. The Signals 1 to 7 may be, for example, LVDS differential signals for better robustness and good communication performance. The Auxiliary Signals 8 to 9 are single ended signals for immediate detection whether a component is ready or not available anymore. The direction of signals from the adapter module 12 to the controller module 13 may be configured freely depending on the type of fieldbus.

An example for a fieldbus may comprise controlling a RS485 transceiver/driver for PROFIBUS DP. In this case, three signals would be needed for transmit, receive and direction control. Another example for a fieldbus may comprise controlling ABBs Modulebus. For this five signals would be needed. One signal each for transmit, receive, direction control, synchronization clock and synchronization clock enable.

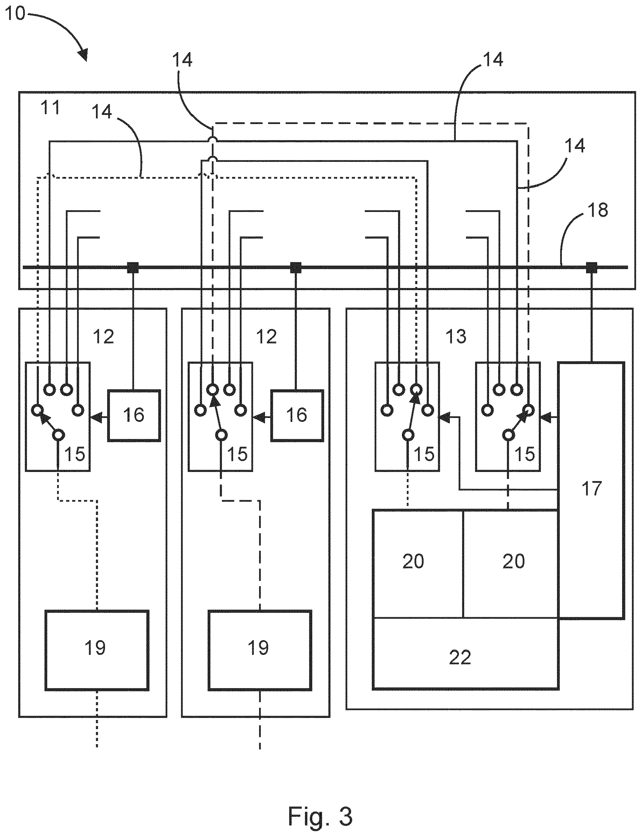

Fig. 3 shows another embodiment for a process control system 10. In this embodiment, the adapter modules 12 and controller modules 13 each comprise selector elements 15. The adapter modules 12 and the controller module 13 are connected to each other by multiple peer-to-peer connections 14.

The adapter modules 12 further comprise each a configuration unit 16, and the controller module 13 contains a configuration unit manager 17. The configuration units and configuration unit manager 17 are designed to communicate via a service Bus connection 18 which may be arranged on the module termnination unit 11.

Preferably, the configuration unit manager 17 may act as a client on the service Bus connection 18 and the configuration unit 16 as a server. The configuration unit manager 17 may know the desired settings of the selector elements 15. This knowledge about aimed settings can be specified from the engineering tool or can be determined from the existing modules in the module termination unit 11. The configuration unit manager 17 controls the selector elements 15 in the controller module 13 and sends the target settings to the respective configuration unit 16 in the adapter modules 12. The configuration unit 16 in the adapter modules 12 controls the selector elements 15 according the target settings. In other words the selector element 15 switches to a desired peer-to-peer connection 14 according to the target settings.

The configuration unit 16 and selector element 15 adapter module may be realized for example by a programmable logic, for example a field programmable gate array (FPGA) circuit. The signals of the peer-to-peer connection 14 may be digital signals, this means that the selector element 15 can be realized as logic gates. The service Bus connection 18 may be realized for example by an I2C Bus, related FPGA-IP-Cores are also possible. The size and complexity of such kind of selector elements 15 and configuration units 16 can be realized in a small size. One important feature of the selector elements 15 and configuration units 16 is that no fieldbus specific protocol knowledge needs to be implemented in the adapter module 12.

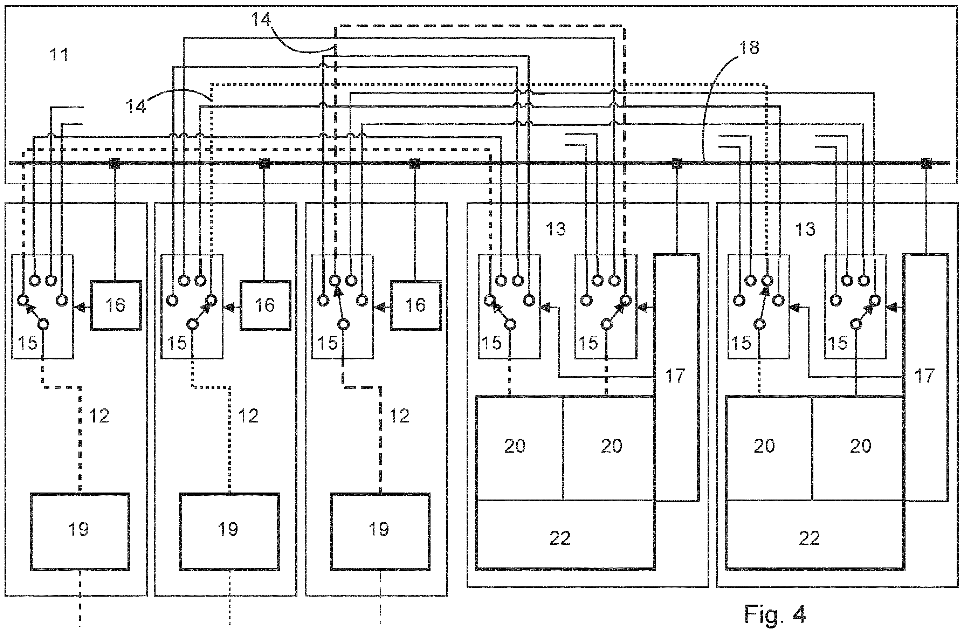

Fig. 4 shows a further embodiment. The process control system 10 comprises three adapter modules 12 and two controller modules 13. The module termination unit 11, the peer-to-peer connection 14 with the adapter modules 12 and controller modules 13 and the service bus connection 18 are different from the embodiment before. Each controller module 13 comprises two selector elements 15. Each selector element 15 of the controller module 13 is connected via a peer-to-peer connection 14 to one selector element 15 of one of the adapter modules 12. The selector elements 15 comprise multiple, in particular three peer-to-peer connections 14. Each adapter module 12 and controller module 13

This allows flexible usage of Adapter Slots and assignment to Controllers with spare resources. Especially in case of extensions and changes of the process control application this kind of flexibly is very helpful.

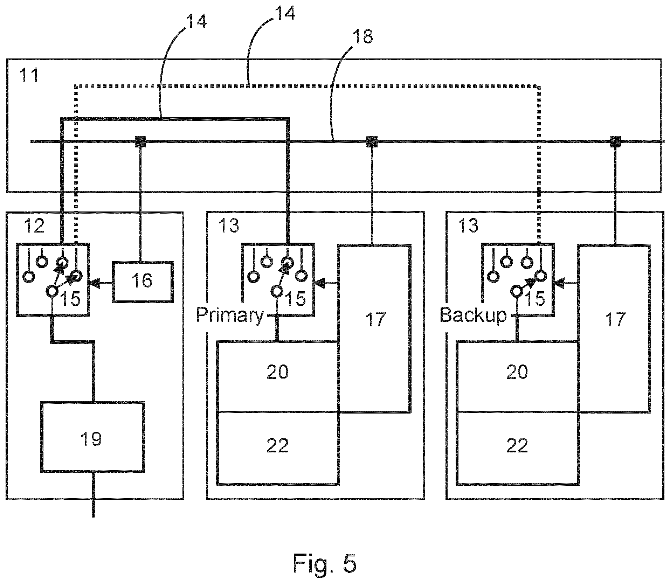

Figure 5 shows an example where two controller modules 13 are assigned or connected to the same adapter module 12. One controller module 13 is a primary controller module and the other controller module 13 is a backup. Here, the functionality of the selector element 15 in the adapter module 12 which can select/connect only one peer-to-peer connection 14 with the controller module 13 can be extended. These one to two relations have the capability to build up a redundant controller system. If the primary controller module 13 fails, then the backup controller module 13 can take over the active role immediately to continue the process. There are options to reach this functionality:
As a first option, the selector element 15 in the adapter module 12 switches immediately to peer-to-peer connection 14 of the backup controller module 13, if the primary controller module fails. Switching the selector element 15 in the adapter module may be performed in different ways.

According to one way, the configuration unit manager 17 of the backup controller module 13 sends the new configuration settings to the configuration Unit 17 of the adapter module 12.

Accordig to another way, the selector element 15 in the adapter module 12 has an automatic function to switch to the backup controller module 13, after a specific pre-defined pattern of the auxiliary aignals was detected. It s also possible, that the backup controller module 13 receives and detects the signals in a passive way.

As a second option, the logic of the selector element 15 of the adapter module 12 emulates the BUS node functionality. This means that the logic in the selector element 15 behaves like he primary controller module and backup controller module 13 had its own transceiver element 19 on the same Bus. If one or both fieldbus communication processors 20 in the controller modules 13 don't behave correct according to bus rules, then it could lead to impermissible states. But this would also be the case if each controller module 13 had its own transceiver element 19 to the same fieldbus device. This kind of functionality of the selector element would also allow the backup controller module 13 to detect the communication between the primary controller module 13 and I/O-device (Remote I/O). By doing so the backup controller module 13 gets the same process image of the I/Os and could take over immediatly incase that the Primary fails.

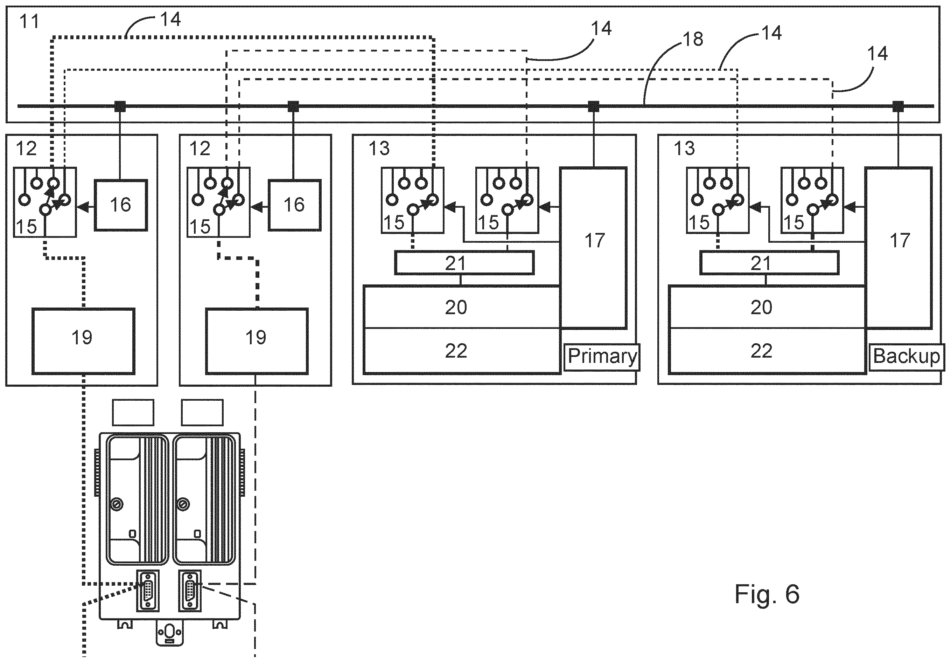

Fig. 6 shows a further embodiment of the process control system 10. The embodiment according to Fig. 5 takes care about redundancy for the controller modules 13 but a failure of the adapter module 12 would stop the communication to the I/Os and is not taken into consideration. This may be colved by the embodiment according to Fig. 6. The controllers modules 13 comprise additional voting units 21. The voting units 21 are arranged between selector elements 15 and the fieldbus communication processor 20. This voting unit 21 may be implemented in an available FPGA. The voting unit 21 may choose which selector element 15 of the controller module 13 should be active.

Any disclosure and embodiments described herein relate to the process control system 10, lined out above or below and vice versa. The benefits provided by any of the embodiments and examples equally apply to all other embodiments and examples and vice versa.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCES

- **10**: Process control system
- **11**: module termination unit
- **12**: adapter module
- **13**: controller module
- **14**: peer-to-peer connection
- **15**: selctor element
- **16**: configuration element
- **17**: configuration unit
- **18**: service BUS connection
- **19**: transceiver element
- **20**: fieldbus communication processor
- **21**: voting unit
- **22**: Execution element (process automation execution engine)

## Claims

1. A process control system (10) comprising:
- at least one module termination unit (11);
- at least one adapter module (12) arranged on the module termination unit (11) and configured to communicate with a field device; and
- at least one controller module (13) arranged on the module termination unit (11) and configured to process data from the adapter module (12);
wherein the adapter module (12) and the controller module (13) are connected to each other by a peer-to-peer connection (14), in particular through the module termination unit (11).

2. The process control system according to claim 1, wherein the controller module (13) is connected to multiple adapter modules (12) by peer-to-peer connections.

3. The process control system according to claim 1 or 2 one of the preceding claims, wherein the adapter module (12) is connected to multiple controller modules (13) by peer-to-peer connections (14).

4. The process control system according to claim 3, wherein at least one controller module (13) of the multiple controller modules (13) is a redundancy controller module (13).

5. The process control system according to one of the preceding claims, wherein the peer-to-peer connection (14) comprises multiple peer-to-peer signal channels, in particular two-way channels and/or one-way channels.

6. The process control system according to one of the preceding claims, wherein the adapter module (12) comprises a selector element (15), the selector element (15) being configured to select one of a plurality of peer-to-peer connections (14).

7. The process control system according to one of the preceding claims, wherein the adapter module (12) comprises a configuration element (16), the configuration element (16) being configured to control the selector element (15).

8. The process control system according to claim 6 or 7, wherein the controller module (13) comprises a configuration unit (17), wherein the configuration unit (17) is configured to communicate with the configuration element (16) of the adapter module (12).

9. The process control system according to claims 6 to 8, wherein the selector element (15) of the adapter module (12) comprises a peer-to-peer connection (14) to the selctor element (15) of the controller module (13) and the configuration element (16) of the adapter module (12) comprises a service BUS connection (18) to the configuration unit (17) of the controller module ().

10. The process control system according to one of the preceding claims, wherein the adapter module (12) and the controller module (13) are separate hardware components.

11. The process control system according to one of the preceding claims, wherein the peer-to-peer connection (14) is achieved through a wiring in the module termination unit (11).

12. The process control system according to claim 11, wherein the wiring of the peer-to-peer connection (14) in the the module termination unit (11) is a passive wiring.

13. The process control system according to one of the preceding claims, wherein the adapter module (12) contains a galvanic insulation between the signals of the selector element (15) and fieldbus signals.

14. The process control system according to one of the preceding claims, wherein the adapter module (12) comprises at least one transceiver element (19) for one or multiple fieldbuses.

15. The process control system according to one of the preceding claims, wherein the controller module (13) comprises a fieldbus communication processor (20) for one or multiple fieldbuses.

16. The process control system according to one of the preceding claims, wherein the controller module (13) comprises a voting unit (21) connected to the selector element (15) and the fieldbus communication processor (20).
